# FASCICULE DE BREVET EUROPEEN

(11) **EP 0 645 574 B1**
(45) Date de publication et mention de la délivrance du brevet: **06.08.1997**
(21) Numéro de dépôt: 94401924.9
(22) Date de dépôt: 30.08.1994
(51) Int. Cl.: F16L 23/10

(54) **Collier de serrage de deux pièces tubulaires ayant un dispositif de blocage de sécurité et utilisation**
Rohrschelle bestehend aus zwei rohrförmigen Teilen mit einer Sicherungssperrvorrichtung und Gebrauch derselben
Pipe clamp comprising two tubular parts having a security locking device and use of the same

(30) Priorité: 28.09.1993 FR 9311519
(43) Date de publication de la demande: 29.03.1995
(73) Titulaire: FRAMATOME, 92400 Courbevoie (FR)
(72) Inventeur: Malmasson, Jacques, F-91000 Evry (FR)
(74) Mandataire: Bouget, Lucien

(56) Documents cités:
- DE-B- 1 294 117
- FR-A- 2 297 377
- US-A- 3 843 168
- US-A- 4 739 542

## Description

L'invention concerne un collier de serrage de deux éléments tubulaires pour leur raccordement étanche et en particulier un collier de serrage de deux parties tubulaires disposées bout à bout du support d'une colonne de thermocouples d'un réacteur nucléaire à eau sous pression.

Les réacteurs nucléaires à eau sous pression comportent une cuve dans laquelle est disposé le coeur du réacteur nucléaire et qui est fermée à sa partie supérieure par un couvercle de forme généralement bombée. Lorsque le réacteur nucléaire est en service, le fluide de refroidissement du réacteur qui est constitué par de l'eau à très haute température et sous très forte pression (310°C et 155 bars) circule à l'intérieur de la cuve, en contact avec les assemblages combustibles constituant le coeur du réacteur.

Pendant le fonctionnement du réacteur nucléaire, il est nécessaire de mesurer les différents paramètres physiques à l'intérieur du coeur et en particulier la température à l'intérieur de certains assemblages combustibles. Le couvercle de la cuve est traversé par des pièces tubulaires appelées adaptateurs disposées parallèlement à l'axe de la cuve qui est vertical, à l'aplomb de certaines positions d'assemblages combustibles dans le coeur.

Sur une partie des adaptateurs, sont montés des supports tubulaires en plusieurs parties permettant d'assurer un passage étanche d'une colonne de thermocouples utilisée pour effectuer la mesure de température dans un groupe d'assemblages du coeur.

La colonne de thermocouples peut être engagée dans l'alésage du support tubulaire et serrée de manière étanche contre une portée d'appui avec interposition d'un joint d'étanchéité métallique, grâce à un dispositif de serrage amovible prenant appui sur la partie supérieure du support.

De manière à permettre un démontage de la colonne de thermocouples dans tous les cas, le support tubulaire est réalisé en deux parties placées bout à bout et assemblées par un collier de serrage constitué de plusieurs parties en forme de portions d'anneau assemblées par des vis, venant en appui sur des portées tronconiques situées aux extrémités rapportées l'une contre l'autre des deux parties du support tubulaire, pour assurer le serrage dans la direction axiale des deux parties du support avec interposition d'un joint entre leurs extrémités placées bout à bout.

De manière à faciliter la manutention et la mise en place des colliers de serrage qui sont des pièces massives, on a proposé de réaliser ces colliers de serrage, sous une forme articulée, le collier de serrage étant constitué par des éléments ayant une surface intérieure en forme de portions d'anneau reliées entre elles de façon articulée, à la manière d'une chaîne par des barrettes et par des axes parallèles à l'axe du collier.

Deux des éléments articulés comportent des extrémités destinées à assurer la fermeture du collier, présentant des embrèvements destinés à coopérer avec des pièces d'appui de forme correspondante lors du serrage du collier.

Une vis traverse les pièces d'appui dans une direction perpendiculaire à l'axe du collier. Deux écrous de serrage sont engagés sur les extrémités de la vis, de manière à venir en contact avec les pièces d'appui pour assurer le serrage du collier, par poussée sur les pièces d'appui elles-mêmes en contact avec les embrèvements des éléments articulés. Les pièces d'appui comportent chacune deux tourillons dont les axes sont alignés qui sont introduits et maintenus dans des ouvertures traversantes situées en vis-à-vis, de deux barrettes placées de part et d'autre des éléments articulés et de la vis qui est engagée dans deux parties en forme de fourche des éléments articulés.

L'une des paires d'ouvertures traversantes des barrettes est constituée par des ouvertures circulaires dans lesquelles les tourillons d'une pièce d'appui sont engagés pratiquement sans jeu et l'autre paire d'ouvertures est constituée par des ouvertures oblongues dans lesquelles les tourillons de l'autre pièce d'appui peuvent coulisser dans la direction longitudinale des barrettes et de la vis, pour faciliter la mise en place du collier de serrage.

Après que le collier ait été mis en place sur les parties de jonction des éléments du support tubulaire de la traversée, on réalise le serrage du collier par vissage de l'un des écrous de manière à rapprocher les portions annulaires internes des éléments articulés du collier et à exercer des forces axiales sur les deux parties du support tubulaires entre lesquelles est intercalé un joint d'étanchéité.

Les colliers de serrage des supports de colonne de thermocouples sont soumis, pendant le fonctionnement du réacteur, à des efforts importants, du fait de la pression très élevée du fluide de refroidissement du réacteur.

Dans le cas où ces efforts entraînent une rupture de la vis de serrage du collier, les pièces d'appui s'écartent l'une de l'autre, ce qui produit une certaine ouverture du collier. Ce déplacement relatif des pièces d'appui est limité par le fait que les tourillons de la pièce d'appui situés dans les ouvertures oblongues viennent en butée contre l'extrémité extérieure des ouvertures oblongues. Le collier de serrage reste en place sur les parties d'appui placées bout à bout des supports de la colonne de thermocouple mais n'assure plus l'étanchéité de la liaison entre les deux parties du support, si bien qu'il se produit une fuite non contrôlée de fluide de refroidissement entre les deux parties du support.

Il peut en résulter des difficultés pour continuer à assurer la sécurité du réacteur nucléaire.

De manière plus générale, dans le cas de l'utilisation d'un collier de serrage de deux éléments tubulaires quelconques placés bout à bout et raccordés entre eux par un collier, il peut être très avantageux de disposer d'un moyen permettant de contrôler une fuite à la jonction entre les éléments tubulaires, en cas de rupture de la vis de serrage du collier ou de freiner les écrous de serrage du collier pour éviter leur desserrage.

Le but de l'invention est donc de proposer un collier de serrage de deux pièces tubulaires pour leur raccordement étanche comportant au moins deux éléments ayant une partie en forme de portion d'anneau articulés l'un par rapport à l'autre autour d'un axe parallèle à l'axe des portions d'anneau et présentant une surface interne d'appui sur deux surfaces d'appui des pièces tubulaires pour leur serrage dans la direction axiale avec interposition d'un joint d'étanchéité et un dispositif de serrage et de verrouillage comportant une vis disposée dans une direction transversale par rapport aux éléments articulés et engagée à travers deux blocs d'appui comportant chacun une partie d'appui sur un embrèvement d'un des éléments articulés et deux tourillons de guidage de part et d'autre de la partie d'appui engagés et maintenus dans une paire d'ouvertures en vis-à-vis traversant deux barrettes de guidage parallèles entre elles disposées de part et d'autre des parties de jonction des éléments articulés comportant des embrèvements et deux écrous engagés sur la vis et en butée chacun sur un bloc d'appui, les ouvertures d'une paire d'ouvertures des barrettes de guidage ayant une forme circulaire et les autres ouvertures une forme oblongue allongée suivant la direction de la vis, ce collier de serrage permettant de contrôler une fuite de fluide entre les deux éléments tubulaires dans le cas d'une rupture de la vis et de fournir un frein d'écrou au dispositif de serrage.

Dans ce but, le collier de serrage suivant l'invention comporte de plus un dispositif de blocage constitué par :
- un support traversé par une ouverture et comportant des parties d'engagement sur les barrettes,
- un contre-écrou monté rotatif dans l'ouverture du support, ayant une ouverture taraudée pour son engagement par vissage sur l'extrémité de la vis située du côté de l'ouverture oblongue et une partie d'appui sur l'écrou engagé sur l'extrémité de la vis,
- des moyens de blocage en rotation et en translation axiale du contre-écrou par rapport au support, et
- au moins un doigt de blocage comportant un pion de verrouillage et un poussoir, monté pivotant sur le support autour d'un axe perpendiculaire à l'axe de la vis entre une position de blocage où le pion de verrouillage est engagé dans une partie d'extrémité d'une ouverture oblongue et une position d'ouverture, le contre-écrou comportant une partie d'appui pour le maintien du doigt de blocage en position de blocage.

Afin de bien faire comprendre l'invention, on va maintenant décrire à titre d'exemple non limitatif, en se référant aux figures jointes en annexe, une colonne de thermocouples comportant un collier de verrouillage de deux parties successives de son support tubulaire et un collier de verrouillage d'un support de colonne de thermocouples suivant l'invention.

La figure 1 est une vue en coupe par un plan vertical de symétrie d'une colonne de thermocouples comportant un collier de verrouillage suivant l'art antérieur.

La figure 2 est une vue de dessus d'un collier de verrouillage suivant l'invention.

La figure 3 est une vue en coupe suivant 3-3 de la figure 2.

La figure 4 est une vue en perspective du dispositif de serrage et de verrouillage du collier représenté sur la figure 2.

La figure 5 est une vue en coupe partielle du dispositif de serrage représenté sur la figure 4 montrant le dispositif de blocage dans sa position de service.

La figure 6 est une vue en coupe partielle analogue à la vue de la figure 5 montrant le dispositif de blocage dans sa position hors service.

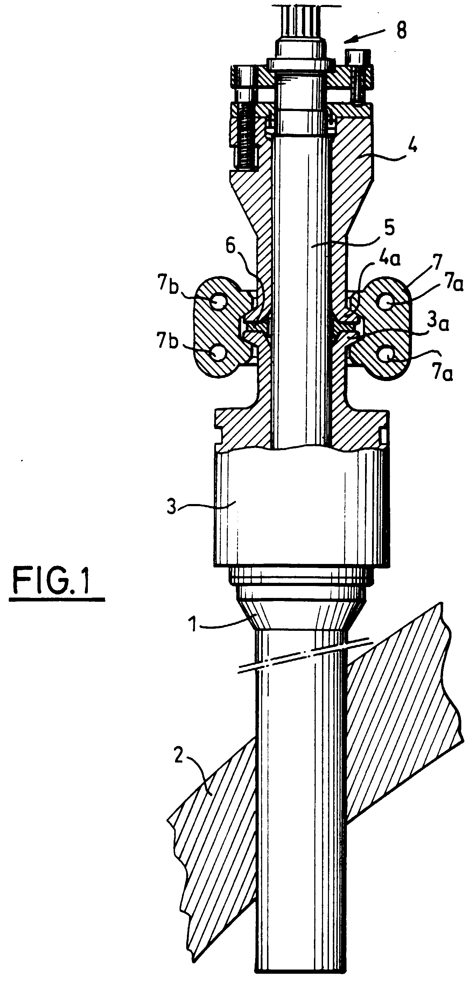

Sur la figure 1, on voit un adaptateur 1 de traversée du couvercle 2 de la cuve d'un réacteur nucléaire à eau sous pression sur lequel est fixé par vissage et par soudure la partie inférieure 3 d'un support tubulaire d'une colonne de thermocouples 5 traversant le couvercle de la cuve 2, à l'intérieur de l'adaptateur 1.

Le support de la colonne de thermocouple 5 comporte une partie supérieure 4 qui est raccordée bout à bout à la partie inférieure 3 fixée sur l'adaptateur 1, avec interposition d'un joint d'étanchéité 6, par l'intermédiaire d'un collier de serrage 7.

La colonne de thermocouples 5 est fixée de manière étanche à l'intérieur de la partie supérieure 4 du support, par un ensemble de levage et de serrage 8 permettant d'exercer une pression sur un joint d'étanchéité intercalé entre un épaulement de la colonne de thermocouple et un épaulement disposé en vis-à-vis dans l'alésage du support tubulaire.

Le collier de serrage 7 est constitué de deux parties en forme de portions d'anneau comportant des oreilles traversées par des ouvertures d'assemblage telles que 7a et 7b.

Les parties inférieure 3 et supérieure 4 du support tubulaire comportent dans leurs parties d'extrémité qui sont raccordées bout à bout, des épaulements tronconiques respectifs 3a et 4a et le collier de serrage 7 comporte des portions de surface interne annulaires de forme tronconique destinées à venir en appui sur les surfaces tronconiques 3a et 4a des extrémités des parties du support.

Pour réaliser l'assemblage des deux parties du support, celles-ci sont rapportées l'une sur l'autre, le joint d'étanchéité 6 étant intercalé entre les extrémités des deux parties du support qui sont raccordées bout à bout.

Les éléments en forme de portions d'anneau constituant le collier de serrage 7 sont mis en place dans la zone de jonction des deux parties du support, de manière que leurs surfaces internes viennent en contact avec les surfaces tronconiques 3a et 4a des deux parties du support. Les oreilles d'assemblage des portions d'anneau sont mises en coïncidence et des vis engagées dans les ouvertures telles que 7a et 7b permettent de réaliser l'assemblage et le serrage du collier 7. Le serrage des portions d'anneau qui constituent deux demi-brides du collier de serrage est réalisé par l'intermédiaire de tiges filetées engagées dans les ouvertures telles que 7a et 7b et serrées par des écrous venant en appui sur les oreilles d'assemblage.

Un tel montage requiert un temps d'exécution relativement long et la présence d'au moins deux opérateurs au voisinage de la surface supérieure du couvercle de la cuve, c'est-à-dire au voisinage d'un composant émettant des rayonnements radio-actifs. Du fait de leur mode de réalisation et d'assemblage, les deux demi-brides constituant le collier de serrage présentent une masse relativement importante et leur mode d'assemblage nécessite le maintien des deux demi-brides dans leur position d'assemblage avant d'introduire les tiges et de visser les écrous d'assemblage.

La présence de deux opérateurs au voisinage du couvercle de la cuve pendant un temps d'intervention qui peut être important peut se traduire par des débits de dose d'irradiations élevés pour les deux opérateurs.

L'utilisation de colliers de serrage articulés qui sont plus légers que les colliers assemblés par des tiges et écrous et dont la mise en place est beaucoup plus rapide permet la mise en place des colliers de serrage par un seul opérateur pendant une durée réduite, de sorte que les doses d'irradiation reçues sont elles-mêmes réduites.

Cependant, comme il est expliqué plus haut, ces colliers dont l'élément de serrage est constitué par une vis de direction transversale ne permettent pas de contrôler parfaitement la fuite de fluide de refroidissement sous pression du réacteur en cas de rupture de la vis.

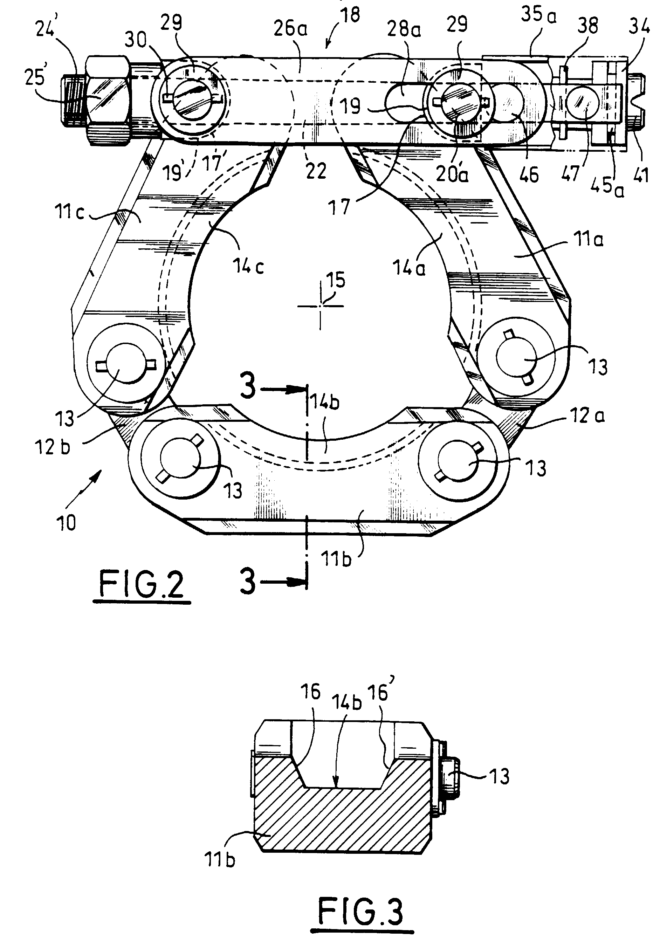

Sur les figures 2 à 6, on a représenté un collier de serrage suivant l'invention réalisé sous forme articulée et comportant un dispositif de blocage permettant de limiter et de contrôler le débit de fuite du fluide de refroidissement du réacteur, en cas de rupture de la vis de serrage.

Comme il est visible sur la figure 2, le collier 10 suivant l'invention comporte trois bras 11a, 11b et 11c reliés entre eux de manière articulée par l'intermédiaire de deux barrettes 12a et 12b et d'axes 13 qui sont tous parallèles entre eux et perpendiculaires aux faces planes latérales des bras 11a, 11b et 11c.

Les bras 11a, 11b et 11c sont usinés sur leur face interne pour constituer trois surfaces respectives 14a, 14b et 14c en forme de portions d'anneau qui ont toutes, dans la position fermée du collier de serrage représentée sur la figure 2, pour axe un même axe 15 constituant l'axe du collier de serrage.

Les axes d'articulation 13 sont également parallèles à l'axe 15.

Comme il est visible sur la figure 3, les surfaces intérieures en forme de portions d'anneau, telles que la surface 14b du bras 11b comportent deux surfaces latérales 16 et 16' inclinées par rapport au plan médian de la surface 14b et de forme annulaire destinées à venir en contact avec les surfaces annulaires tronconiques telles que 3a et 4a (figure 1) de deux parties qui peuvent être raccordées bout à bout d'un support de colonne de thermocouples.

Lors de la fermeture et du verrouillage du collier 10, on réalise par coopération des surfaces 16 et 16' et de surfaces telles que 3a et 4a de parties d'extrémité des pièces à raccorder, un serrage axial des deux pièces du support l'une par rapport à l'autre avec interposition d'un joint d'étanchéité.

Le serrage et le verrouillage du collier 10 est réalisé par un dispositif 18 comportant deux blocs d'appui 19 et 19' venant en contact lors du serrage et du verrouillage du collier 10, avec deux embrèvements 17 et 17' en forme de portions de cylindre à section circulaire usinés dans les parties des bras 11a et 11c dirigées vers l'extérieur.

On va maintenant décrire en se référant à l'ensemble des figures 2, 4, 5 et 6, le dispositif de serrage et de verrouillage 18 du collier 10 suivant l'invention.

Les blocs d'appui 19 et 19' présentent chacun une partie centrale délimitée par une surface cylindrique dont le rayon est égal au rayon de l'embrèvement 17 ou 17' du bras 11a ou 11c sur lequel le bloc 19 ou 19' vient en appui et une surface plane parallèle à l'axe de la surface cylindrique réalisée par fraisage pour constituer une surface d'appui plane d'un écrou.

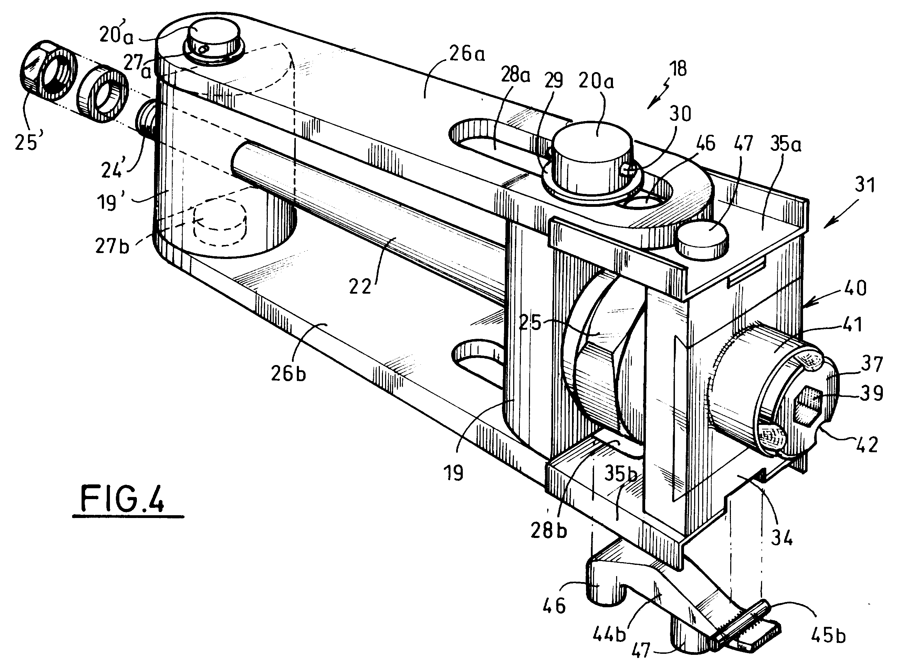

Comme il est visible sur les figures 4, 5 et 6, la partie centrale du bloc 19 est délimitée par la surface cylindrique 19a et la surface plane 19b ; le bloc 19 comporte de part et d'autre de la partie centrale, deux tourillons 20a et 20b ayant un axe commun 21 parallèle à l'axe de la partie centrale.

Le bloc 19' présente une forme analogue à la forme du bloc 19 et se trouve placé dans une position symétrique, de manière que les surfaces cylindriques des blocs 19 et 19' venant en appui sur les surfaces 17 et 17' des bras 11a et 11c, se trouvent en vis-à-vis l'une de l'autre.

La partie centrale de chacune des pièces 19 et 19' est traversée par une ouverture telle que 23 (pièce 19) ayant une direction perpendiculaire à l'axe 21 des tourillons 20a et 20b et à l'axe de la partie centrale du bloc d'appui 19.

Une vis 22 est engagée par ses parties d'extrémité filetées 24 et 24' à l'intérieur des ouvertures telles que 23 traversant les blocs 19 et 19' qui présentent un diamètre supérieur au diamètre extérieur de la vis pour obtenir un montage glissant des blocs d'appui par l'intermédiaire des parties d'extrémité 24 et 24'. Ces parties 24 et 24' sont partiellement en saillie par rapport à chacun des blocs 19 et 19', de part et d'autre de ces blocs d'appui 19 et 19'.

Des écrous 25 et 25' vissés sur les parties d'extrémité en saillie de la vis 22 de part et d'autre des blocs 19 et 19' sont mis en contact avec les surfaces planes telles que 19b des blocs 19 et 19' pour assurer la mise en appui des surfaces cylindriques telles que 19a contre les embrèvements 17 et 17' des bras 11a et 11c du collier et le serrage et le verrouillage du collier 10.

Le dispositif de serrage et de verrouillage 18 comporte deux barrettes 26a et 26b comprenant chacune une ouverture circulaire 27a ou 27b et une ouverture oblongue 28a ou 28b dans lesquelles sont engagés les tourillons des blocs d'appui 19 et 19'.

Les tourillons du bloc d'appui 19' sont engagés dans les ouvertures circulaires 27a et 27b des barrettes 26a et 26b placées en vis-à-vis et les tourillons 20a et 20b du bloc 19 sont introduits dans les ouvertures oblongues 28a et 28b respectivement qui se trouvent également en vis-à-vis, du fait que les barrettes 26a et 26b sont identiques.

Les barrettes 26a et 26b sont placées parallèlement l'une par rapport à l'autre, de part et d'autre de la vis 22 et dans sa direction axiale.

Les tourillons tels que 20a et 20b et les blocs 19 et 19' sont maintenus dans les ouvertures correspondantes des barrettes 26a et 26b par des ensembles de rondelles telles que 29 et de goupilles telles que 30 associés à des parties des tourillons en saillie par rapport à la face externe des barrettes correspondantes 26a et 26b.

Les tourillons 20a et 20b dont le diamètre est inférieur au diamètre des ouvertures oblongues 28a et 28b sont montés glissants dans les ouvertures oblongues de manière que le bloc 19 puisse être déplacé dans la direction longitudinale des ouvertures oblongues et des barrettes, pour permettre de réaliser la mise en place et le serrage du collier par l'intermédiaire de l'écrou 25 en appui contre la surface 19b du bloc d'appui 19. Le serrage du collier est réalisé par l'intermédiaire des blocs d'appui en contact avec les embrèvements 17 et 17' des bras articulés 11a et 11c du collier.

Selon l'invention, le collier de serrage 10 comporte un dispositif de blocage désigné de manière générale par le repère 31 qui est mis en place après le serrage du collier par l'intermédiaire de l'écrou 25 qui est vissé sur l'extrémité filetée 24 de la vis 22 de manière que la vis présente une partie d'extrémité 32 en saillie vers l'extérieur par rapport à l'écrou 25 et constituée par l'extrémité de la partie filetée 24.

Le dispositif de blocage 31 comporte un support 33 constitué par une entretoise 34 d'une longueur sensiblement égale à la longueur de la partie centrale du bloc d'appui 19 et par deux plaques profilées 35a et 35b fixées aux extrémités de l'entretoise 34 et comportant des bords relevés dont l'écartement est sensiblement égal à la largeur des barrettes 26a et 26b.

L'entretoise 34 est traversée par une ouverture lisse 36 dans laquelle est monté rotatif et glissant, un contre-écrou 37.

Le contre-écrou 37 comporte un alésage interne taraudé 37a permettant son engagement par vissage sur l'extrémité saillante 32 filetée de la vis 22. L'alésage taraudé 37a est ouvert à l'une des extrémités du contre-écrou 37, suivant laquelle le contre-écrou 37 présente extérieurement un flasque d'appui 38.

A son extrémité opposée au flasque d'appui 38, l'écrou 37 comporte une ouverture profilée 39, par exemple à section hexagonale permettant de faire tourner le contre-écrou 37 à l'intérieur de l'ouverture lisse 36 pour son vissage sur l'extrémité 32 de la vis 22, à l'aide d'un outil adapté. Une pièce de blocage 40 destinée à assurer le blocage et l'imperdabilité du contre-écrou 37 comporte une base de forme carrée ayant des bords inclinés venant s'engager contre des bords inclinés d'une ouverture de l'entretoise 34, de manière à assurer un assemblage en queue d'aronde entre la base carrée de la pièce de blocage 40 et l'entretoise 34. Sur la base de la pièce de blocage 40 est fixée une virole mince déformable 41 dont le diamètre intérieur est légèrement supérieur au diamètre extérieur du contre-écrou 37.

Le contre-écrou 37 comporte des embrèvements 42 dans lesquels la virole déformable 41 peut être engagée et sertie après vissage du contre-écrou sur l'extrémité 32 de la vis 22, à l'intérieur de la pièce de blocage 40 qui comporte une ouverture assurant le passage du contre-écrou 37, dans le prolongement de la virole 41.

L'entretoise 34 présente à ses extrémités fixées sur les plaques 35a et 35b, deux lumières 43a et 43b dans chacune desquelles est engagée une partie d'extrémité d'un doigt de blocage 44a ou 44b monté pivotant sur l'entretoise 34, par l'intermédiaire d'un axe 45a ou 45b perpendiculaire à l'axe de la vis 22 constituant l'axe de serrage du collier.

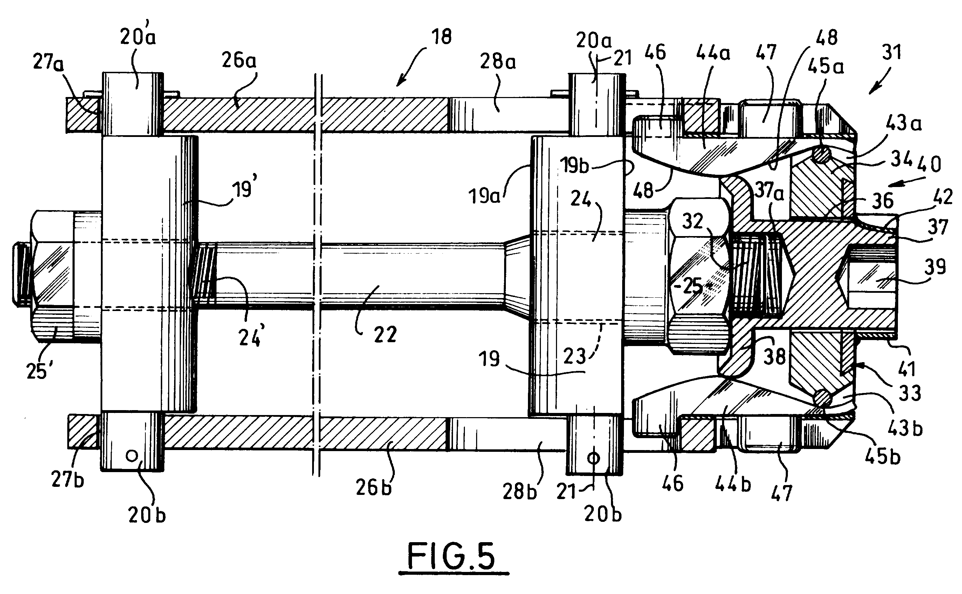

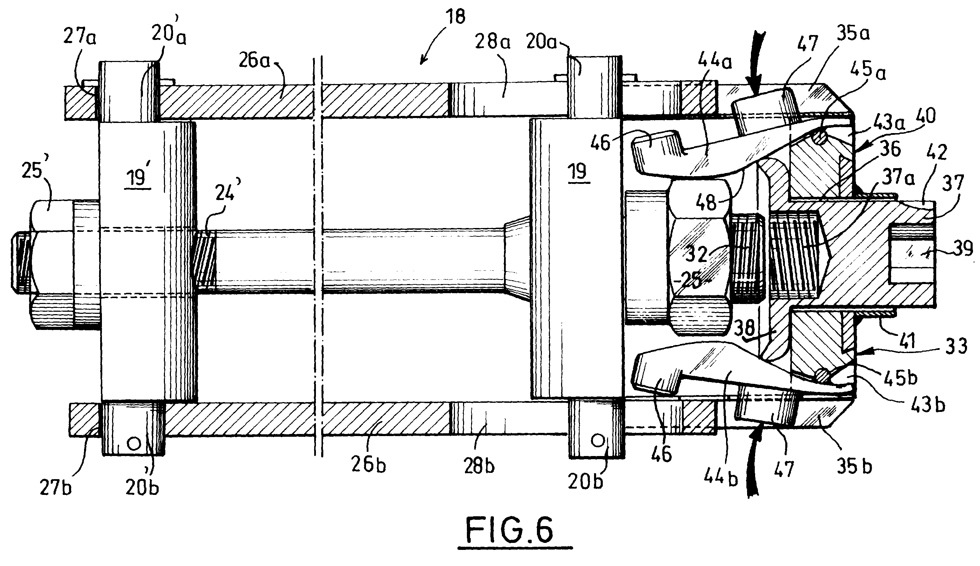

Les lumières 43a et 43b et la partie d'extrémité des doigts de blocage 44a et 44b sont réalisées de manière à permettre un pivotement des doigts 44a et 44b entre une position de blocage représentée sur la figure 5 et une position d'ouverture représentée sur la figure 6.

Chacun des doigts 44a et 44b comporte un pion de blocage 46 et un poussoir d'appui 47 sur une de ses faces sensiblement plane.

La face opposée du doigt de blocage comporte une surface inclinée 48 destinée à venir en contact avec l'extrémité du flasque 38 du contre-écrou 37 qui réalise le maintien du doigt en position de blocage lorsque le contre-écrou 37 est vissé sur l'extrémité 32 de la vis pour réaliser son blocage, comme réalisé sur la figure 5.

Lorsque le contre-écrou 37 n'est pas en prise avec la partie d'extrémité 32 de la vis, le flasque 38 vient en appui contre la surface intérieure de l'entretoise 34 et libère les doigts de blocage qui peuvent être basculés vers l'intérieur par appui sur les poussoirs 47, comme représenté sur la figure 6.

Les plaques 35a et 35b sont traversées par des ouvertures permettant le passage des poussoirs 47 et des pions de blocage 46.

Après mise en place et serrage du collier par serrage au couple de l'écrou 25 sur l'extrémité de la vis 22, pour réaliser le raccordement étanche de deux pièces tubulaires telles que deux parties d'un support de colonne de thermocouples, les plaques 35a et 35b du dispositif 31 dont les doigts de blocage 44a et 44b sont placés en position d'ouverture par appui sur les poussoirs 47, le contre-écrou 37 étant dans sa position en appui contre l'entretoise 34 par l'intermédiaire de son flasque 38, sont engagées sur les parties d'extrémité des barrettes 26a et 26b du côté des ouvertures oblongues 28a et 28b.

Le moyen de blocage 40 placé dans l'ouverture de l'entretoise 34 est engagé sur la surface extérieure saillante du contre-écrou. On maintient en place le dispositif de blocage 31 dont les plaques 35a et 35b sont engagées sur les parties d'extrémité des barrettes 26a et 26b et on réalise le vissage du contre-écrou 37 sur l'extrémité 32 de la vis 22 saillante à l'extérieur de l'écrou 25, en utilisant une clé profilée introduite dans l'ouverture 39.

Le vissage du contre-écrou 35 est poursuivi jusqu'au moment où le flasque 38 est venu en appui contre l'écrou 25.

Pendant le vissage du contre-écrou, le bord extérieur du flasque 38 coopère avec la surface d'actionnement 48 de chacun des doigts de blocage pour faire pivoter les doigts vers l'extérieur de manière que le pion de blocage 46 soit introduit dans l'ouverture oblongue correspondante 28a ou 28b, en fin de vissage, lorsque le flasque 38 est en butée contre l'écrou 25.

Les pions de blocage 46 viennent se placer contre l'extrémité extérieure de l'ouverture oblongue correspondante 28a ou 28b, entre cette extrémité et le tourillon 20a ou 20b.

En effet, les ouvertures oblongues 28a et 28b sont prévues de manière que dans la position de serrage et de verrouillage du collier, il subsiste entre les tourillons 20a et 20b et l'extrémité extérieure des ouvertures oblongues 28a et 28b, un espace d'une longueur supérieure au diamètre du pion de blocage 46.

Le contre-écrou 37 est rendu indesserrable et imperdable par le sertissage de parties de la virole déformable 41 dans les embrèvements 42 du contre-écrou 37.

Après une intervention pour réparation ou entretien sur le réacteur nucléaire nécessitant le démontage du support d'une ou de plusieurs colonnes de thermocouples, le ou les supports sont assemblés et serrés de manière étanche en utilisant un ou plusieurs colliers de serrage suivant l'invention.

Après remise en fonctionnement du réacteur nucléaire, les colliers de serrage subissent des efforts sous l'effet du fluide de refroidissement du réacteur à haute pression.

Les écrous de serrage 25 des colliers sont rendus indesserrables du fait que le contre-écrou 37 est en appui par un flasque 38 sur l'écrou de serrage 25 et constitue un frein d'écrou.

Dans le cas de la rupture d'une vis 22 d'un collier de serrage selon l'invention comportant un dispositif de blocage 31, les efforts tendant à ouvrir le collier de serrage et à écarter les branches 11a et 11c et les pièces d'appui 19 et 19' sont repris par l'intermédiaire de l'écrou 25 du contre-écrou 37 en appui sur l'écrou, de l'entretoise 34, des doigts de blocage 44a et 44b et des barrettes 26a et 26b. Il se produit un bouclage des efforts par l'intermédiaire du bloc d'appui 19' engagé par ses tourillons d'extrémité dans les ouvertures circulaires des barrettes 26a et 26b.

Il ne peut donc se produire qu'un déplacement très faible des branches du collier, si bien que la perte d'étanchéité de la jonction entre les éléments tubulaires est elle-même très faible.

La fuite de fluide de refroidissement du réacteur sous très haute pression est donc très limitée, ce qui permet de réaliser l'arrêt d'urgence du réacteur nucléaire en toute sécurité, sans échappement notable de matière radioactive.

Après arrêt et refroidissement du réacteur nucléaire, on peut réaliser très rapidement le démontage du collier de serrage défectueux et la mise en place d'un nouveau collier de serrage des pièces tubulaires.

Pour effectuer des opérations de réparation ou d'entretien programmées ou exceptionnelles, on peut réaliser facilement et rapidement le démontage des colliers de serrage, après démontage du dispositif de blocage.

Pour effectuer le démontage du dispositif de blocage, on réalise tout d'abord le découpage de la virole de fixation 41 et sa séparation du contre-écrou 37 puis le dévissage du contre-écrou de manière à le séparer de la partie d'extrémité 32 de la vis.

Le dispositif de blocage 31 peut alors être séparé dans son ensemble du collier de serrage en exerçant une pression sur les poussoirs 47, comme représenté sur la figure 6. On dégage ainsi les pions de blocage 46 des ouvertures oblongues 28a et 28b et le dispositif de blocage 31 peut être séparé du collier de serrage par simple traction.

Le dispositif suivant l'invention permet donc d'assurer une parfaite sécurité des colliers de serrage de pièces tubulaires soumises à des efforts très importants. En outre, ce dispositif de blocage peut être facilement mis en place ou démonté ; il peut être facilement adapté à des colliers de serrage existants.

L'invention ne se limite pas au mode de réalisation qui a été décrit. C'est ainsi que le support du dispositif de blocage, le contre-écrou et les doigts peuvent être réalisés sous une forme et d'une manière différentes de celles qui ont été décrites.

On peut assurer l'indesserrabilité et l'imperdabilité du contre-écrou d'une manière différente de celle qui a été décrite.

De même, l'actionnement des doigts de blocage peut être réalisé par des moyens différents de ceux qui ont été décrits.

L'invention s'applique non seulement dans le cas de la jonction étanche de supports tubulaires de colonnes de thermocouples mais encore dans le cas d'une jonction étanche bout à bout de pièces tubulaires quelconques subissant des efforts importants en service.

## Revendications

1. Collier de serrage de deux pièces tubulaires (3, 4) pour leur raccordement étanche comportant au moins deux éléments (11a, 11c) ayant une partie (14a, 14c) en forme de portion d'anneau, articulés l'un par rapport à l'autre autour d'un axe (13) parallèle à l'axe des portions d'anneau (14a, 14c), et présentant une surface interne d'appui sur deux surfaces d'appui (3a, 4a) des éléments tubulaires (3, 4) pour leur serrage dans la direction axiale avec interposition d'un joint d'étanchéité (6) et un dispositif de serrage et de verrouillage (18) comportant une vis (22) disposée dans une direction transversale par rapport aux éléments articulés (11a, 11c) et engagée à travers deux blocs d'appui (19, 19') comportant chacun une partie d'appui (19a) sur un embrèvement (17, 17') d'un des éléments articulés (11a, 11c) et deux tourillons de guidage (20a, 20b) de part et d'autre de la partie d'appui (19a) engagés et maintenus dans une paire d'ouvertures (27a, 27b ; 28a, 28b) traversant dans une disposition en vis-à-vis, deux barrettes de guidage (26a, 26b) parallèles entre elles, disposées de part et d'autre de parties de jonction des éléments articulés (11a, 11c) comportant les embrèvements (17, 17') et deux écrous (25, 25') engagés sur la vis (22) et en butée chacun sur un bloc d'appui (19, 19'), les ouvertures (27a, 27b) d'une paire d'ouvertures des barrettes de guidage (26a, 26b) ayant une forme circulaire et les autres ouvertures (28a, 28b) une forme oblongue allongée suivant la direction de la vis (22), caractérisé par le fait qu'il comporte de plus un dispositif de blocage (31) constitué par :
- un support (33) traversé par une ouverture (36) et comportant des parties d'engagement (35a, 35b) sur les barrettes (26a, 26b),
- un contre-écrou (37) monté rotatif dans l'ouverture (36) du support (33), ayant une ouverture taraudée (37a) pour son engagement par vissage sur une extrémité (32) de la vis (22) située du côté des ouvertures oblongues (28a, 28b) et une partie d'appui (38) sur l'écrou (25) engagé sur l'extrémité (32) de la vis,
- des moyens (40, 41) de blocage en rotation et en translation axiale du contre-écrou (37) par rapport au support (33), et
- au moins un doigt de blocage (44a, 44b) comportant un pion de verrouillage (46) et un poussoir (47), monté pivotant sur le support (33) autour d'un axe perpendiculaire à l'axe de la vis (22) entre une position de blocage où le pion de verrouillage (46) est engagé dans une partie d'extrémité d'une ouverture oblongue (28a, 28b) et une position d'ouverture, le contre-écrou (37) comportant une partie d'appui (38) pour le maintien du doigt de blocage (44a, 44b) en position de blocage.

2. Collier de serrage suivant la revendication 1, caractérisé par le fait que le support (33) comporte une entretoise (34) et deux plaques (35a, 35b) profilées ayant des bords relevés fixées parallèlement l'une à l'autre sur des parties d'extrémité de l'entretoise (34), les bords relevés des plaques (35a, 35b) ayant un écartement sensiblement égal à la largeur des barrettes (26a, 26b) et constituant les parties d'engagement du support (33) et l'entretoise (34) étant traversée par l'ouverture (36) d'engagement du contre-écrou (37).

3. Collier de serrage suivant la revendication 2, caractérisé par le fait que l'entretoise (34) comporte, au voisinage de ses extrémités fixées aux plaques (35a, 35b) des embrèvements (43a, 43b) dans lesquelles sont montés pivotants par l'intermédiaire d'axes (45a, 45b) deux doigts pivotants de blocage (44a, 44b).

4. Collier de serrage suivant l'une quelconque des revendications 1, 2 et 3, caractérisé par le fait que le contre-écrou (37) comporte un flasque (38) destiné à venir en appui en position de blocage sur l'écrou (25) engagé sur l'extrémité (32) de la vis (22) et comprenant une surface d'actionnement du doigt de blocage (44a, 44b) pour sa mise et son maintien en position de blocage.

5. Collier de serrage suivant l'une quelconque des revendications 1 à 4, caractérisé par le fait que les moyens de blocage en rotation et en translation axiale du contre-écrou (37) par rapport au support (33) comportent une virole déformable (41) reliée au support (33) et des embrèvements (42) dans une partie d'extrémité du contre-écrou (37), destinés à recevoir des parties déformées par sertissage de la virole (41).

6. Collier de serrage suivant la revendication 5, caractérisé par le fait que la virole (41) est solidaire d'une base engagée et maintenue sur le support (33) par un assemblage à queue d'aronde.

7. Utilisation d'un collier de serrage suivant l'une quelconque des revendications 1 à 6, pour la jonction étanche de deux parties (3, 4) d'un support tubulaire d'une colonne de thermocouples d'un réacteur nucléaire à eau sous pression.

## Patentansprüche

1. Manschette zum Zusammenspannen zweier rohrförmiger Teile (3, 4) für deren dichte Verbindung, mit mindestens zwei Elementen (11a, 11c), die einen Abschnitt (114a, 14c) in Form eines Ringstücks aufweisen, die miteinander gelenkig verbunden und um eine Achse (13) schwenkbar sind, die zur Achse der Ringstücke (14a, 14c) parallel ist, und eine Innenoberfläche zur Auflage auf zwei Auflageflächen (3a, 4a) der rohrförmigen Elemente (3, 4) zu deren Zusammenspannung in axialer Richtung aufweisen, unter Zwischenanordnung einer Dichtung (6) und einer Klemm- und Verriegelungsvorrichtung (18), die eine Gewindespindel (22) aufweist, die in Bezug auf die gelenkig verbundenen Elemente (11a, 11c) in Querrichtung angeordnet ist und durch zwei Auflageblöcke (19, 19') hindurchgehend eingreift, die jeweils einen Abschnitt (19a) zur Auflage in einer Ausnehmung (17, 17') eines der gelenkig verbundenen Elemente (11a, 11c) sowie zwei Führungszapfen (20a, 20b) beiderseits des Auflageabschnitts (19a) aufweisen, die in zwei Öffnungen (27a, 27b; 28a, 28b) eingreifen und in diesen gehalten werden, die einander gegenüberliegend zwei Führungsstege (26a, 26b) durchsetzen, die zueinander parallel sind und beiderseits der Zusammenfügungsstelle der gelenkig verbundenen Elemente (11a, 11c) angeordnet sind, die die Ausnehmungen (17, 17') aufweisen, sowie zwei Muttern (25, 25'), die auf der Gewindespindel (22) eingreifen und jeweils gegen einen Auflageblock (19, 19') anstoßen, wobei die Öffnungen (27a, 27b) des einen Paares von Öffnungen der Führungsstege (26a, 26b) eine kreisartige Form und die anderen Öffnungen (28a, 28b) eine längliche Form aufweisen, die sich der Länge nach in Richtung der Gewindespindel (22) erstreckt, dadurch gekennzeichnet, daß sie außerdem eine Sperrvorrichtung (31) aufweist, die gebildet ist durch:
- einen Träger (33), der von einer Öffnung (36) durchsetzt ist und Abschnitte zum Eingriff (35a, 35b) auf den Stegen (26a, 26b) aufweist,
- eine Gegenmutter (37), die drehbar in der Öffnung (36) des Trägers (33) angebracht ist und eine mit Innengewinde versehene Öffnung (37a) für ihren Schraubeingriff auf dem einen Ende (32) der Gewindespindel (22) aufweist, das auf der Seite der länglichen Öffnungen (28a, 28b) gelegen ist, sowie ein Abschnitt zur Anlage (38) auf der Mutter (25), die auf dem Ende (32) der Gewindespindel eingreift,
- Mittel (40, 41), um die Gegenmutter (37) in Drehrichtung und in Richtung der axialen Versetzung in Bezug auf den Träger (33) zu sperren, und
- mindestens einen Sperrfinger (44a, 44b), der einen Verriegelungsstein (46) und einen Mitnehmer (47) aufweist und am Träger (33) um eine Achse, die senkrecht steht zur Achse der Gewindespindel (22), zwischen einer Sperrlage, in der der Verriegelungsstein (46) in einen Endabschnitt der einen länglichen Öffnung (28a, 28b) eingreift, und einer Öffnungslage schwenkbar angebracht ist, wobei die Gegenmutter (37) einen Auflageabschnitt (38) aufweist, um den Sperrfinger (44a, 44b) in der Sperrlage zu halten.

2. Spannmanschette nach Anspruch 1, dadurch gekennzeichnet, daß der Träger (33) einen Quersteg (34) und zwei profilierte Platten (35a, 35b) aufweist, die hochgezogene Ränder aufweisen und parallel zueinander auf den Endabschnitten des Querstegs (34) befestigt sind, wobei die hochgezogenen Ränder der Platten (35a, 35b) einen Abstand aufweisen, der im wesentlichen gleich ist der Breite der Stege (26a, 26b), und die Eingriffsabschnitte des Trägers (33) und des Querstegs (34) bilden, der von der Eingriffsöffnung (36) für die Gegenmutter (37) durchsetzt ist.

3. Spannmanschette nach Anspruch 2, dadurch gekennzeichnet, daß der Quersteg (34) in der Nähe seiner Enden, die an den Platten (35a. 353b) befestigt sind, Aussparungen (43a, 43b) aufweist, in denen die beiden Sperr-Schwenkfinger (44a, 44b) mittels Achsen (45a, 45b) schwenkbar angebracht sind.

4. Spannmanschette nach irgendeinem der Ansprüche 1, 2 und 3, dadurch gekennzeichnet, daß die Gegenmutter (37) einen Flansch (38) aufweist, der dazu bestimmt ist, in der Sperrlage auf der Mutter (25) in Eingriff zu gelangen, die auf dem Ende (32) der Gewindespindel (22) eingreift, und eine Betätigungsoberfläche für den Sperrfinger (44a, 44b) aufweist, um ihn in die Sperrlage zu verbringen und dort zu halten.

5. Spannmanschette nach irgendeinem der Ansprüche 1 bis 4, dadurch gekennzeichnet, daß die Mittel zur Sperrung der Gegenmutter (37) gegenüber der Drehung und der axialen Versetzung in Bezug auf den Träger (33) einen verformbaren Ring (41) aufweisen, der mit dem Träger (33) und mit Ausnehmungen (42) im einen Endabschnitt der Gegenmutter (37) verbunden ist, die dazu bestimmt sind, die durch Klemmwirkung verformten Abschnitte des Ringes (41) aufzunehmen.

6. Spannmanschette nach Anspruch 5, dadurch gekennzeichnet, daß der Ring (41) fest mit einer Basis verbunden ist, die durch eine Schwalbenschwanzanordnung auf dem Träger (33) in Eingriff steht und dort gehalten ist.

7. Verwendung einer Spannmansschette nach irgendeinem der Ansprüche 1 bis 6 für die dichte Verbindung der beiden Abschnitte (3, 4) eines rohrförmigen Trägers für eine Thermoelementsäule eines Druckwasser-Kernreaktors.

## Claims

1. Collar for clamping two tubular parts (3, 4) for their sealed connection comprising at least two members (11a, 11c) having a part (14a, 14c) in the shape of a portion of a ring, pivoted one with respect to the other about a pin (13) parallel to the axis of the ring portions (14a, 14c) and comprising an internal surface bearing against two bearing surfaces (3a, 4a) of the tubular members (3, 4) for their clamping in the axial direction with interposition of a gasket (6) and a clamping and locking device (18) comprising a screw (22) disposed in a transverse direction with respect to the pivoted members (11a, 11c) and engaged through two bearing blocks (19, 19') each comprising a bearing part (19a) on a joggle (17, 17') of one of the pivoted members (11a, 11c) and two guide journals (20a, 20b) on either side of the bearing part (19a) engaged and retained in a pair of openings (27a, 27b; 28a, 28b) passing through in facing relationship, two small guide bars (26a, 26b) parallel to each other, disposed on either side of parts for joining the pivoted members (11a, 11c) comprising the joggles (17, 17') and two nuts (25, 25') engaged on the screw (22) and each in abutment with a bearing block (19, 19'), the openings (27a, 27b) of a pair of openings of the small guide bars (26a, 26b) having a circular shape and the other openings (28a, 28b) an oblong shape elongated in the direction of the screw (22), characterised by the fact that in addition it comprises a locking device (31) constituted by:
- a support (33) penetrated by an opening (36) and comprising parts (35a, 35b) for engagement on the small bars (26a, 26b),
- a lock-nut (37) mounted to rotate in the opening (36) of the support (33), having a tapped opening (37a) for its engagement by screwing on one end (32) of the screw (22) situated adjacent the oblong openings (28a, 28b) and a part (38) for bearing on the nut (25) engaged on the end (32) of the screw,
- means (40, 41) for preventing rotation and axial translation of the lock-nut (37) with respect to the support (33), and
- at least one locking finger (44a, 44b) comprising a locking stud (46) and a push-button (47), mounted to pivot on the support (33) about an axis perpendicular to the axis of the screw (22) between a locking position where the locking stud (46) is engaged in an end part of an oblong opening (28a, 28b) and an open position, the lock-nut (37) comprising a bearing part (38) for keeping the locking finger (44a, 44b) in the locking position.

2. Clamping collar according to Claim 1, characterised by the fact that the support (33) comprises a spacer member (34) and two profiled plates (35a, 35b) having raised edges fixed parallel to each other on end parts of the spacer member (34), the raised edges of the plates (35a, 35b) having a spacing substantially equal to the width of the small bars (26a, 26b) and constituting the engagement parts of the support (33) and the spacer member (34) being penetrated by the opening (36) for the engagement of the lock-nut (37).

3. Clamping collar according to Claim 2, characterised by the fact that the spacer member (34) comprises, in the vicinity of its ends fixed to the plates (35a, 35b) joggles (43a, 43b) in which two pivoting locking fingers (44a, 44b) are mounted to pivot through the intermediary of pins (45a, 45b).

4. Clamping collar according to one of Claims 1, 2 and 3, characterised by the fact that the lock-nut (37) comprises a cheek (38) intended to bear, in the locked position, against the nut (25) engaged on the end (32) of the screw (22) and comprising a surface for actuating the locking finger (44a, 44b) for bringing it into and retaining it in the locking position.

5. Clamping collar according to one of Claims 1 to 4, characterised by the fact that the means for preventing rotation and axial translation of the lock-nut (37) with respect to the support (33) comprise a deformable sleeve (41) connected to the support (33) and joggles (42) in an end part of the lock-nut (37), intended to receive parts deformed by crimping of the sleeve (41).

6. Clamping collar according to Claim 5, characterised by the fact that the sleeve (41) is integral with a base engaged and retained on the support (33) by a dovetail assembly.

7. Use of a clamping collar according to one of Claims 1 to 6, for the sealed joining of two parts (3, 4) of a tubular support for a column of thermocouples of a pressurised water nuclear reactor.
